# EUROPEAN PATENT SPECIFICATION

(11) **EP 2 290 922 B1**
(45) Date of publication and mention of the grant of the patent: **09.05.2012**
(21) Application number: 10010598.0
(22) Date of filing: 23.11.2001
(51) Int. Cl.: H04M 1/247, H04M 1/725, G06F 3/033, G06F 3/048

(54) **Apparatus for providing user interface for a portable terminal**
Gerät zur Bereitstellung einer Benutzerschnittstelle für ein tragbares Endgerät
Appareil de mise à disposition un interface utilisateur pour un terminal portatif

(30) Priority: 23.11.2000 KR 20000070022
(43) Date of publication of application: 02.03.2011
(62) Divisional of application: 01127953.6
(73) Proprietor: Samsung Electronics Co., Ltd., Suwon-si, Gyeonggi-do 442-743 (KR)
(72) Inventor: Hong, Jun-Il, Suwon City, Kyungki-Do 442-742 (KR)
(74) Representative: Grünecker, Kinkeldey, Stockmair & Schwanhäusser

(56) References cited:
- EP-A- 0 913 977
- WO-A-97/03534
- DE-A1- 19 743 459
- US-A- 5 396 264
- US-A- 5 737 394
- US-A- 5 914 668
- MICHEAL SMITH: "Tray42: Using the Windows 95 System Tray in C", 19990116, [Online] 16 January 1999 (1999-01-16), pages 1-8, XP007916260, Retrieved from the Internet: URL:http://www.chebucto.ns.ca/~aa529/tray4 2.html> [retrieved on 2010-12-09]

## Description

The present invention relates generally to a portable terminal, and in particular, to a method of providing a user interface to implement a function related to a state indicator displayed on a display.

A portable terminal generally displays information about an operation state, received information, and the like on a display such as an LCD (Liquid Crystal Display) panel. Most commonly, an RSSI (Received Signal Strength Indicator), alarm setting, arrival of an SMS (Short Message Service) message, a battery state, and call reservation setting are displayed as unique images. These unique images are called state indicators.

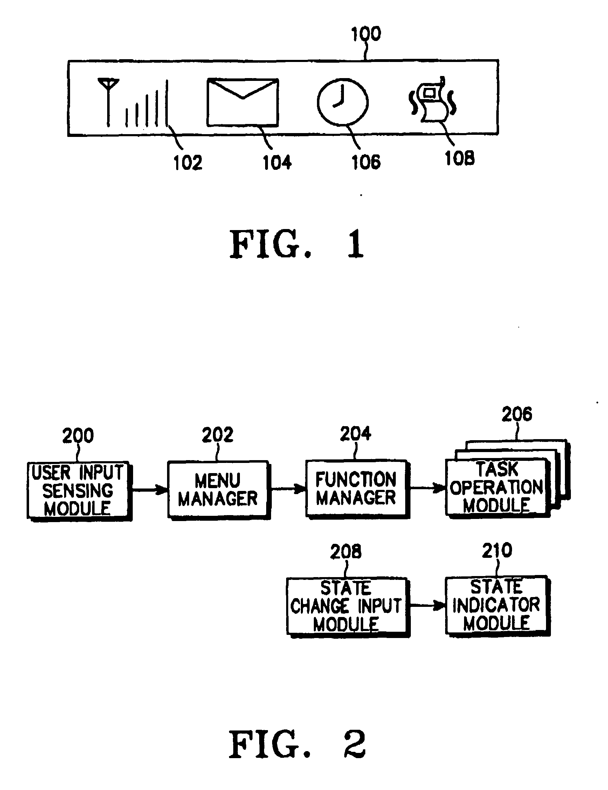

FIG. 1 illustrates an example display with state indicators for a general portable terminal. Four state indicators 102 to 108 are shown on a display 100. Reference numeral 102 denotes an RSSI, reference numeral 104 denotes arrival of a message, reference numeral 106 denotes alarm setting, and reference numeral 108 denotes setting of a vibration mode. Such state indicators as 102 to 108 are utilized for the single use of representing corresponding state changes in the portable terminal.

FIG. 2 is a block diagram of user interfacing software modules related to state changes in the general portable terminal. A state change input module 208 senses a state change that is to be reflected in a corresponding state indicator and provides the state change to a state indicator module 210. When such a state change occurs, a new state indicator is produced or the state representation of an existing state indicator is changed. For example, when an alarm is newly set, the state indicator 106 is generated or when it is time to sound an alarm, the state indicator 106 blinks. A user input sensing module 200 senses a user input like a touch screen input or a button input and notifies a menu manager 202 of the user input. The menu manager 202 selects a function corresponding to a menu selected according to the sensing result of the user input sensing module 200 and notifies a function manager 204 of the selected function. The function manager 204 operates a task operation module corresponding to the selected function among task operation modules 206.

Some state indicators need to invoke their related functions as well as to present state changes to a user. A portable terminal may provide such functions. As far as the RSSI state indicator 102 of FIG. 1 is concerned, the user simply views the state indicator 102 to check the current RSSI, whereas he can implement related functions using the other state indicators 104, 106, and 108 when necessary, as well as recognize state changes represented by the state indicators 104, 106, and 108. For example, when the user recognizes the arrival of a message from the message state indicator 104, he may implement a message read function to read the message. In this case, the user invokes the message read function using a tree structure of menu navigation as provided by the menu manager 202 of FIG. 2. The tree structure of menu navigation causes the inconvenience of entering a plurality of keys by the user and in case the user does not know which menu to search for to execute an intended function, the user inevitably experiences trials and errors.

As an improvement to the menu navigation, a "hot key" scheme has been proposed. According to the hot key scheme, a specific function is additionally registered for a certain key, besides its unique function, so that the registered function is directly invoked by pressing the key under some condition or a certain key is designated for exclusive use of the specific function to directly invoke the function by pressing the key. For example, when the user recognizes arrival of a message from the message state indicator 104, he can read the message without menu navigation by pressing a key specifically designated for message reading.

Even though this hot key method relieves the user of the inconvenience of entering a plurality of keys and experiencing trials and errors, the use of different functions with one key depending on conditions may confuse the user and the separate designation of keys for dedicated use of specific functions increases the number of keys, impeding miniaturization of a mobile phone.

Michael Smith: "Tray42: Using the Windows 95 System Tray in C", [online] January 16, 1999, pages 1 to 8 refers to the system tray of Windows 95, Windows NT 4 and future versions of Windows, as a holding place for various notifications, including a clock and small icons. When right-clicked these icons will usually pop-up a small menu from which the user can select to close the program that owns the icon, open up a settings dialog box, and other tasks. The programmer implements this using Shell_Notifylcon and a NOTIFYICONDATA structure. A small application is referred to that demonstrates the use of the systray.

It is the object of the present invention to provide an apparatus for use in a portable terminal for providing an improved user interface in a portable terminal for invoking a plurality of functions in a way a user can directly invoke an intended function as well as view the state representation of the state indicator, so that it is not necessary to designate a particular key for each function.

This object is solved by the subject matter of the independent claim.

Preferred embodiments are defined in the dependent claims.

Further, according to a corresponding method of providing a user interface for invoking a function related with a state indicator in a portable terminal, an altered state representation of the state indicator is displayed when a predetermined change occurs in the state representation of the state indicator is provided. According to the method, the related function is registered for the state indicator when a state change to be reflected in the representation of the state indicator occurs and the state representation of the state indicator is altered is provided. Upon receipt of a user input for designating the state indicator, the registered function is invoked.

The above object, features and advantages of the present invention will become more apparent from the following detailed description when taken in conjunction with the accompanying drawings in which:
FIG. 1 illustrates an example display of state indicators in a typical mobile phone;
FIG. 2 is a block diagram of user interfacing software modules operated according to state changes in the typical mobile phone;
FIG. 3 is a block diagram of a mobile phone to which the present invention is applied;
FIG. 4 is a block diagram of user interfacing software modules operated according to state changes according to an embodiment of the present invention;
FIG. 5 is a flowchart illustrating a state change registering method according to the embodiment of the present invention; and
FIG. 6 is a flowchart illustrating a user interfacing method according to state changes according to the embodiment of the present invention.

A preferred embodiment of the present invention will be described hereinbelow with reference to the accompanying drawings. In the following description, well-known functions or constructions are not described in detail since they would obscure the invention in unnecessary detail.

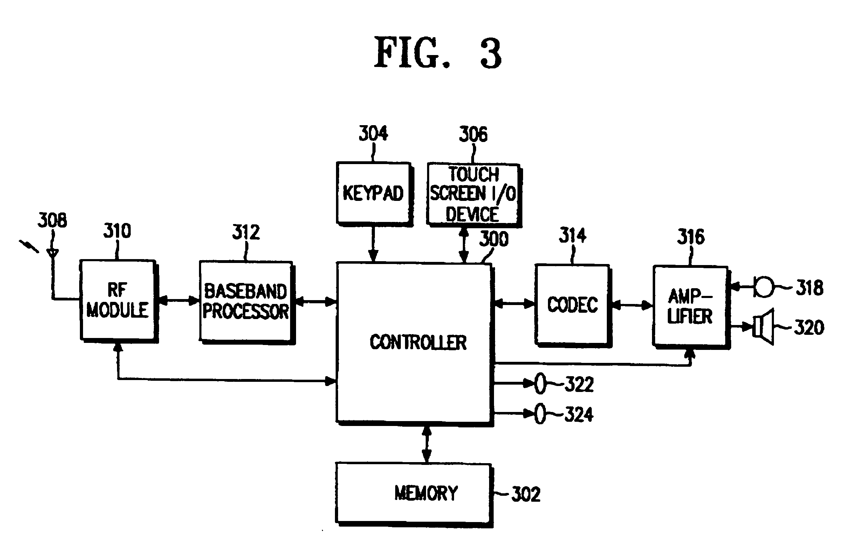

FIG. 3 is a block diagram of a mobile phone as an example of a portable terminal to which the present invention is applied. Referring to FIG. 3, a controller 300 is connected to a memory 302, a keypad 304, a touch screen input/output (I/O) device 306, an RF module 310, a baseband processor 312, and a CODEC 314. The controller 300, being generally a microprocessor chip for exclusive use, processes a general telephone call or data communication, a voice signal and data for wireless Internet access according to a corresponding protocol and controls each component of the mobile phone. As will be described below, the controller 300 processes a user interfacing function according to the present invention. Thus, a description of the controller 300 in the context with the general call process, data communication, and wireless Internet access will be omitted here.

The memory 302 includes a ROM (Read Only Memory), a flash memory, and a RAM (Random Access Memory). The ROM stores operation and control programs and data generated during the control operation of the controller 300. The RAM provides a working memory to the controller 300. The flash memory stores updatable data to be kept.

The keypad 304 includes digit keys and function keys and provides a key input corresponding to a key pressed by the user to the controller 300. The touch screen I/O device 306 is of a structure where a TSP (Touch Sensitive Panel) for user input covers an LCD panel for displaying data thereon. Therefore, the touch screen I/O device 306 displays data as images under the control of the controller 300 and allows the user to use a pen or his finger for user input. The RF module 310 converts an RF signal received from a base station via an antenna 308 to an IF (Intermediate Frequency) signal and outputs the IF signal to the baseband processor 312. The RF module 310 also converts an IF signal received from the baseband processor 312 to an RF signal and transmits the RF signal via the antenna 308.

The baseband processor 312 is a BBA (Baseband Analog ASIC) for interfacing between the controller 300 and the RF module 310. The baseband processor 312 converts a digital baseband signal received from the controller 300 to an analog IF signal and applies the analog IF signal to the RF module 3 10. The baseband processor 312 also converts an analog IF signal received from the RF module 310 to a digital baseband signal and applies to the digital baseband signal to the controller 300. The CODEC 314 is connected to a microphone 318 and a speaker 320 via an amplifier 316. The CODEC 314 PCM (Pulse Code Modulation)-encodes a voice signal received from the microphone 3 18 and outputs the voice data to the controller 300. The CODEC 314 PCM-decodes voice data received from the controller 300 and outputs the voice signal to the speaker 320 via the amplifier 316. The amplifier 316 amplifies a voice signal received from the microphone 316 and a voice signal to be transmitted to the speaker 320 and adjusts the volume of the speaker 320 and the gain of the microphone 318 under the control of the controller 300. A ringer 322 generates a ring sound under the control of the controller 300 and a vibrator 324 produces vibrations under the control of the controller 300.

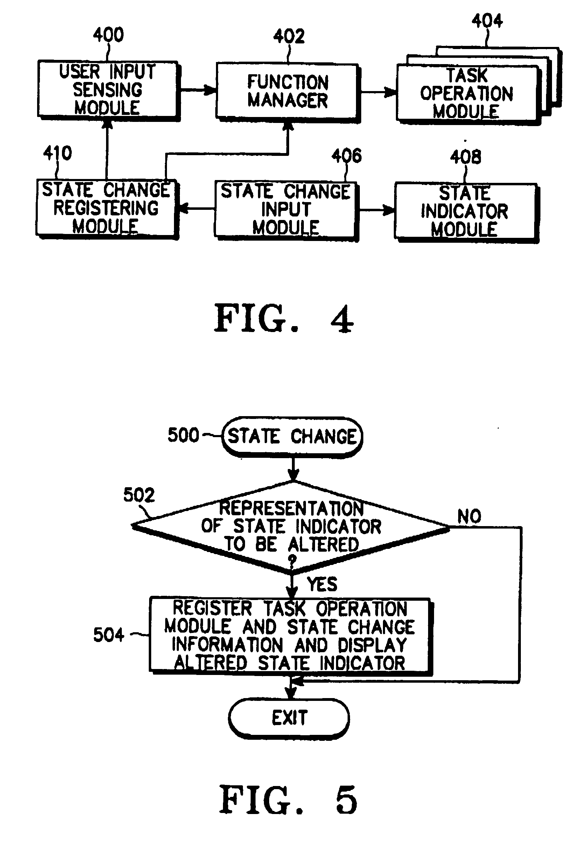

FIG. 4 is a block diagram of user interfacing software modules operated according to state changes in the controller 300 of FIG. 3 according to an embodiment of the present invention. The software modules of FIG. 4 are different from those of FIG. 2 in that the menu manager 202 is omitted. Similarly, to the state change input module 208, a state change input module 406 senses a state change that is to be reflected in a state indicator and notifies a state indicator module 408 of the state change. Then, the state change is displayed on the screen of the touch screen I/O device 306. According to the present invention, the state change input module 406 additionally registers a function associated with the state indicator in a state change registering module 410.

FIG. 5 is a flowchart illustrating a state change registering method according to an embodiment of the present invention. Referring to FIG. 5, when a state change occurs in step 500, the controller 300 determines whether the state change is the kind of state change that will alter the state representation of a state indicator in step 502. If the state change will not change the state representation of the state indicator, a normal operation is performed. On the other hand, if the state change will alter the state representation of the state indicator, the controller 300 registers a related function for the state indicator and alters the state representation of the state indicator in step 504. The function registration is the process of storing the ID (Identification) of a task operation module corresponding to the function and context data representing state change information in the state change registering module 410 for the corresponding state indicator.

For example, when an alarm is set, the state change input module 406 notifies a state indicator module 408 of the state change so that the state change is displayed on the screen of the touch screen I/O device 306 as in the conventional method. Additionally, a task operation module 404 corresponding to an alarm setting-associated function and state change information are registered for the state indicator 106 of FIG. 1 as shown in Table 1 and Table 2. APP_ID_CLOCK is the ID of a clock module for performing a clock function in Table 1 and APP_ID_SCHEDULER is the ID of a scheduler module for scheduling in Table 2.

**(Table 1)**

| state indicator | task operation module ID | state change information |
|---|---|---|
| alarm state indicator | APP_ID_CLOCK | 2000/11/12 17:30 |
| message state indicator | APP_ID_MESSAGE | 2000111/18 15:30 |
| . | . | . |
| . | . | . |

**(Table 2)**

| state indicator | task operation module ID | state change information |
|---|---|---|
| alarm state indicator | APP_ID_SCHEDULER | 2000/21/25 fourth item |
| message state indicator | APP_ID_MESSAGE | 2000/11/18 15:30 |
| . | . | . |
| . | . | . |

If the state change input module 406 senses an arrival of a new message, it notifies the state indicator module 408 of the message arrival and the state indicator module 408 displays the message arrival on the screen of the touch screen I/O device 306 as in the conventional method. Additionally, a task operation module 404 corresponding to a message reading function and state change information are registered for the state indicator 104 of FIG. 1 as shown in Table 1 and Table 2. The state change information indicates information about the new message by which a task operation module, registered for the state indicator 104, displays the new message on the screen when the user designates the state indicator 104.

In this state, if the user designates the state indicator after viewing the altered state representation of the state indicator, a user input sensing module 400 senses the user designation and notifies a function manager 402 of the user designation. The function manager 402 checks the function registered for the designated state indicator and operates a task operation module 404 corresponding to the function.

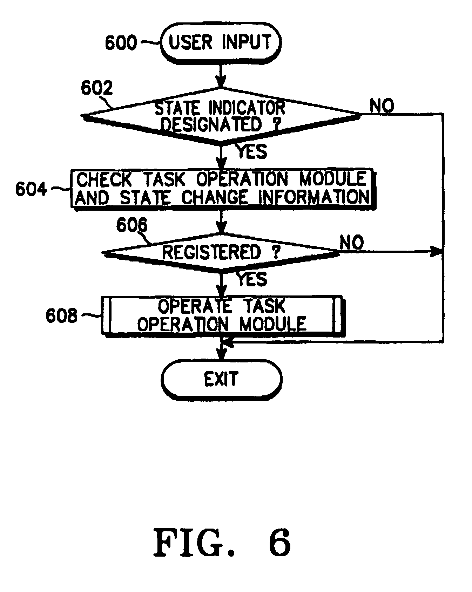

FIG. 6 is a flowchart illustrating a user interfacing method for performing a function corresponding to a designated state indicator in the controller 300. Referring to FIG. 6, upon receipt of a user input, that is, a button input from the keypad 304 or a touch screen input from the touch screen I/O device 306 in step 600, the controller 300 determines whether the user input designates a state indicator in step 602. Designation of a state indicator is done by a touch screen input or a button input. In the case of the touch screen input, the controller 300 determines whether the coordinates of the touch screen input are identical to those of a state indicator representation area. If the touch screen input coordinates indicates one of the state indicators 102 to 108 of FIG. 1, the controller 300 considers that the state indicator is designated and goes to step 604. Otherwise, a normal operation is performed. The button input is applied when a touch screen input is impossible, that is, to a mobile phone having a display for simply displaying images or texts instead of the touch screen I/O device 306. The user designates a state indicator by pressing a select key when he positions a cursor or an input focus over the representation area of the state indicator using scroll keys.

In step 604, the controller 300 checks a task operation module and state change information for the designated state indicator from the state change registering module 410. The controller 300 determines whether a related function has been registered in step 606. In the case of the state indicator 102 of FIG. 1, there is no function registered for the state indicator 102 since it just indicates an RSSI. In this case, the user input is neglected. On the contrary, if a related function is registered, the controller 300 operates the registered task operation module according to the state change information, thereby performing the related function in step 608.

If the user designates the state indicator 104 of FIG. 1 by touch screen input or button input, the message module APP_ID_MESSAGE shown in Tables. 1 and 2 is operated so that a message delivered at 15:30 in November 18, 2000 is displayed.

If as an alarm is set, the state indicator 106 of FIG. 1 is displayed and then the state indicator 106 is designated, an alarm function is invoked. In the case of Table 1, a clock module APP_ID_CLOCK is performed so that an alarm setting for November 12, 2000 is displayed. In the case of Table 2, a scheduling module APP_ID_SCHEDULER is performed so that a fourth schedule item for December 25, 2000 is displayed.

As described above, since a user can directly invoke an intended function related with a state indicator by touch screen input or button input, the present invention relieves the user of the inconvenience of pressing keys many times and experiencing trials and errors. Furthermore, user confusion involved in key manipulation is eliminated and keys for exclusive purposes need not be designated separately. As a result, miniaturization of a mobile phone is not impeded.

While the invention has been shown and described with reference to a certain preferred embodiment thereof, it will be understood by those skilled in the art that various changes in form and details may be made therein. Though the invention has been described in connection with state indicators representing message arrival and alarm setting, it is also applicable to other state indicators such as a call reservation state indicator. The invention can be applied to any portable terminal in which functions related to the display of state indicators need to be invoked, such as a smart phone and a PDA (Personal Digital Assistant) as well as a mobile phone.

The following is a list of embodiments:
Embodiment 1: A method of providing a user interface for invoking a function related to a state indicator in a portable terminal displaying the state indicator, which indicates a state change, the method comprising:
   registering the related function for the state indicator when a state change to be reflected in the representation of the state indicator occurs;
   altering the state representation of the state indicator; and
   invoking the registered function when a predetermined event occurs.
Embodiment 2: The method of embodiment 1, wherein the predetermined event is a receipt of a user input for designating the state indicator.
Embodiment 3: The method of embodiment 1, further comprising determining whether coordinates of a touch screen input indicate a representation area of the state indicator upon receipt of the touch screen input; and wherein the predetermined event is that the coordinates of the touch screen input indicate the representation area of the state indicator.
Embodiment 4: The method of embodiment 1, further comprising determining whether a cursor or an input focus is positioned over a representation area of the state indicator upon receipt of a user button input; and wherein the predetermined event is that the cursor or input focus is positioned over the representation area of the state indicator.
Embodiment 5: The method of embodiment 3, wherein the state indicator indicates message arrival in a portable terminal where the state indicator is displayed on a screen of a touch screen input/output device when the message arrives, the related function represents a message reading function, and the state change to be reflected represents a message arrival.
Embodiment 6: The method of embodiment 3, wherein the state indicator indicates alarm setting in a portable terminal where the state indicator is displayed on a screen of a touch screen input/output device when an alarm is set, the related function represents an alarm function, and the state change to be reflected represents setting an alarm.

## Claims

1. An apparatus for use in a portable terminal, for providing a user interface for invoking a plurality of functions related to a state indicator in the portable terminal displaying a plurality of state indicators (102, 104, 106, 108), wherein a state change is reflected in a corresponding state indicator, the apparatus comprising:
a controller (300) comprising:
a state indicator module (408);
a state change registering module (410);
a state change input module (406);
a user input sensing module (400); and
a function manager (402),
wherein the state change input module (406) is adapted, upon occurrence of a state change to be reflected in the representation of the state indicator, to register a function related to the state change in the state change registering module (410), and to notify the state indicator module (408) to alter the state representation of the state indicator corresponding to the state change, and
if the user input sensing module (400) recognizes reception of a user input for designating the state indicator, the function manager (402) is adapted to perform the function registered in the state change registering module (410) corresponding to the designated state indicator.

2. The apparatus of claim 1, wherein the user input for designating the state indicator is a touch screen input indicating a representation area of the state indicator.

3. The apparatus of claim 1, wherein the user input for designating the state indicator is a user's button input when a cursor or an input focus is positioned over the representation area of the state indicator.

4. The apparatus of claim 2, wherein the state indicator represents message arrival in the portable terminal where the state indicator is displayed on a screen of a touch screen input/output device when the message arrives, the related function is a message reading function, and the state change to be reflected is message arrival.

5. The apparatus of claim 2, wherein the state indicator represents alarm setting in the portable terminal where the state indicator is displayed on a screen of a touch screen input/output device when an alarm is set, the related function is an alarm function, and the state change to be reflected is alarm setting.

## Patentansprüche

1. Vorrichtung zum Einsatz in einem tragbaren Endgerät, mit der eine Benutzerschnittstelle zum Aufrufen einer Vielzahl von Funktionen, die sich auf eine Statusanzeige beziehen, in dem tragbaren Endgerät bereitgestellt wird, die eine Vielzahl von Statusanzeigen (102, 104, 106, 108) optisch anzeigt, wobei eine Status-Änderung in einer entsprechenden Statusanzeige widergespiegelt wird und die Vorrichtung umfasst:
eine Steuereinrichtung (300), die umfasst:
ein Statusanzeige-Modul (408);
ein Modul (410) zum Registrieren von Status-Änderungen;
ein Modul (406) zum Eingeben von Status-Änderungen;
ein Modul (400) zum Erfassen von Benutzereingabe; und
einen Funktions-Manager (402),
wobei das Modul (406) zum Eingeben von Status-Änderungen so eingerichtet ist, dass es bei Auftreten einer Status-Änderung, die in der Darstellung der Statusanzeige widergespiegelt werden soll, eine Funktion, die sich auf die Status-Änderung bezieht, in dem Modul (410) zum Registrieren von Status-Änderungen registriert und das Statusanzeige-Modul (408) anweist, die Status-Darstellung der Statusanzeige entsprechend der Status-Änderung zu verändern, und
der Funktions-Manager (402) so eingerichtet, dass er, wenn das Modul (400) zum Erfassen von Benutzereingabe Empfang einer Benutzereingabe erkennt, mit der die Statusanzeige angegeben wird, die in dem Modul (400) zum Registrieren von Status-Änderungen registrierte Funktion durchführt, die der angegebenen Statusanzeige entspricht.

2. Vorrichtung nach Anspruch 1, wobei die Benutzereingabe, mit der die Statusanzeige angegeben wird, eine Touchscreen-Eingabe ist, die einen Darstellungsbereich der Statusanzeige anzeigt.

3. Vorrichtung nach Anspruch 1, wobei die Benutzereingabe, mit der die Statusanzeige angegeben wird, eine Tasteneingabe eine Benutzers ist, wenn ein Cursor oder ein Fokus über dem Darstellungsbereich der Statusanzeige positioniert ist.

4. Vorrichtung nach Anspruch 2, wobei die Statusanzeige Nachrichteneingang in dem tragbaren Endgerät darstellt, die Statusanzeige auf einem Bildschirm einer Touchscreen-Eingabe/Ausgabe-Einrichtung optisch angezeigt wird, wenn die Nachricht eingeht, die zugehörige Funktion eine Nachrichtenlesen-Funktion ist und die widerzuspiegelnde Status-Änderung Nachrichteneingang ist.

5. Vorrichtung nach Anspruch 2, wobei die Statusanzeige Alarm-Einstellung in dem tragbaren Endgerät darstellen, die Statusanzeige auf einem Bildschirm einer Touchscreen-Eingabe/Ausgabeeinrichtung optisch anzeigt wird, wenn ein Alarm eingestellt ist, die zugehörige Funktion eine Alarmfunktion ist und die widerzuspiegelnde Status-Änderung Alarmeinstellung ist.

## Revendications

1. Dispositif destiné à être utilisé dans un terminal portable, pour donner à un utilisateur la possibilité de demander une pluralité de fonctions associées à un indicateur d'état dans le terminal portable affichant une pluralité d'indicateurs d'état (102, 104, 106, 108), dans lequel un changement d'état est représenté par un indicateur d'état correspondant, le dispositif comprenant :
un contrôleur (300) comprenant :
un module indicateur d'état (408) ;
un module d'enregistrement de changement d'état (410) ;
un module d'entrée de changement d'état (406) ;
un module détecteur d'entrée d'utilisateur (400) ; et
un gestionnaire de fonction (402),
dans lequel, lors de l'apparition d'un changement d'état destiné à être représenté par la représentation de l'indicateur d'état, le module d'entrée de changement d'état (406) est adapté à enregistrer une fonction associée au changement d'état dans le module d'enregistrement de changement d'état (410) et à demander au module indicateur d'état (408) de modifier la représentation d'état de l'indicateur d'état correspondant au changement d'état, et
si le module détecteur d'entrée (400) reconnaît la réception d'une entrée d'utilisateur pour désigner l'indicateur d'état, le gestionnaire de fonction (402) est adapté à exécuter la fonction enregistrée dans le module d'enregistrement de changement d'état (410) correspondant à l'indicateur d'état désigné.

2. Dispositif selon la revendication 1, dans lequel l'entrée d'utilisateur pour désigner l'indicateur d'état est une entrée d'écran tactile indiquant une zone de représentation de l'indicateur d'état.

3. Dispositif selon la revendication 1, dans lequel l'entrée d'utilisateur pour désigner l'indicateur d'état est une entrée d'une touche de l'utilisateur lorsqu'un curseur ou une cible de saisie est positionné au-dessus de la zone de représentation de l'indicateur d'état.

4. Dispositif selon la revendication 2, dans lequel l'indicateur d'état représente l'arrivée d'un message dans le terminal portable où l'indicateur d'état est affiché sur un écran d'un dispositif d'entrée/sortie à écran tactile lorsque le message arrive, la fonction associée est une fonction de lecture de message et le changement d'état destiné à être représenté est l'arrivée d'un message.

5. Dispositif selon la revendication 2, dans lequel l'indicateur d'état représente un réglage d'alarme dans le terminal portable où l'indicateur d'état est affiché sur un écran d'un dispositif d'entrée/sortie à écran tactile lorsqu'une alarme est déterminée, la fonction associée est une fonction d'alarme et le changement d'état destiné à être représenté est un réglage d'alarme.
